# EUROPÄISCHE PATENTSCHRIFT

(11) **EP 1 216 775 B1**
(45) Veröffentlichungstag und Bekanntmachung des Hinweises auf die Patenterteilung: **14.12.2005**
(21) Anmeldenummer: 01126360.5
(22) Anmeldetag: 07.11.2001
(51) Int. Cl.: B23B 51/00

(54) **Bohrplatte und Halter für Bohrplatte**
Cutting insert and holder for spade drill
Plaquette de forage et porte-outil

(30) Priorität: 30.11.2000 US 727243
(43) Veröffentlichungstag der Anmeldung: 26.06.2002
(73) Patentinhaber: Heule, Ulf, 9436 Balgach (CH)
(72) Erfinder: Heule, Heinrich, 9434 Au (CH)
(74) Vertreter: Riebling, Peter

(56) Entgegenhaltungen:
- EP-A- 0 216 064
- US-A- 3 049 033
- US-A- 4 744 704
- US-A- 5 423 640
- US-A- 5 599 145

## Beschreibung

Die Erfindung betrifft eine Bohrplatte und einen Halter für eine Bohrplatte nach dem Oberbegriff des Patentanspruchs 1.

Eine derartige Bohrplatte ist beispielsweise mit dem Gegenstand der DE 3204210C2 bekannt geworden. Eine gleiche technische Lehre ergibt sich außerdem aus der EP 625 395 B1.

Bei den genannten Bohrplatten nach dem Stand der Technik besteht der Nachteil, daß die Spanleitstufe des Halters der Bohrplatten nicht optimal ausgebildet werden kann, weil die Bohrplatte eine über ihre axiale Länge gesehen gleichmäßige Dicke bzw. Blattstärke aufweist.

Dies führt zu dem Nachteil, daß die Bohrplatte an der Fußseite (an der Anlagefläche im Halter) genauso dick ist, wie vergleichsweise an der Schneidekante (im vorderen Spitzenbereich) und daß wegen der relativ schmalen Ausführung der Bohrplatte die Spanleitstufe des Halters der Bohrplatte nicht geeignet ist, die Späne optimal abzuführen.

Es hat sich nämlich gezeigt, daß derartige Bohrplatten sogenannte Fließspäne erzeugen, was bedeutet, daß die Späne während des Bohrvorganges nicht abbrechen sonder praktisch unendlich lang sind. Damit besteht der Nachteil, daß sich die Späne um das Werkzeug wickeln und nur schwer zu entfernen sind.

Es ist nicht möglich, die Platte wesentlich dicker bzw. mit einer größeren Blattstärke ausgebildet zu gestalten, um entsprechend optimale Spanleitstufen und einen Spanleitwinkel an dem Halter der Bohrplatte anzubringen, weil dadurch der Halter im Bereich der Festlegung der Platte zu dünn wird und während des Bohrvorganges brechen könnte.

Will man nämlich die Platte breiter ausbilden, dann besteht der Nachteil, daß entsprechend auch die Klemmschlitzbreite im Halter vergrößert werden muß, was mit einer Schwächung der Haltelappen im Halter verbunden ist, die deshalb dann nicht mehr die Platte optimal gegen entstehende Drehmomente sichern können. Es besteht dann Bruchgefahr für diese Haltelappen im Halter.

Andererseits ist es auch nicht möglich, die bekannte Bohrplatte dünner zu gestalten, um eine entsprechende Spanleitstufe mit einem Spanleitwinkel anzubringen, weil diese Platte dann in Richtung auf ihre fußseitige Befestigung konisch nach innen zuläuft und derart dünn ausgestaltet wird, daß Bruchgefahr für die Platte besteht.

Als weiterer Stand der Technik sind an dieser Stelle die US 3,049,033 B und die EP 216 064 anzuführen. Die US 3,049,033 B beschreibt eine Bohrplatte mit mehrheitlich parallel geführten Geometrien. Dies hat jedoch den Nachteil dass eine Ausbildung eines Hochleistungsschliffes an den Schneidkanten nicht möglich ist. Ein Hochleistungsschliff ermöglicht extreme Spanabhebung pro Arbeitsgang wie dies in der Industrie bei der Bearbeitung von Werkstücken gefordert wird. Dabei werden mit solchen Mitteln Materialabtragungen in einem Vielfachen der Stärke erreicht wie sie mit herkömmlichen Bohrwerkzeugen zu erreichen sind. Dies liegt daran, dass sowohl die Materialien als auch die Schnittgeometrien entsprechend verbessert wurden. Die US-Bohrplatte hat nun aber noch mehrheitlich parallel ausgeführte Flächen, die herkömmlichen Geometrien entsprechen, und sie weist lediglich eine verstärkende Rippe auf.

Bei der EP 216 064 A handelt es sich nun nicht um eine Bohrplatte, sondern um eine Fräsplatte, d. h. eine Schneidplatte zum Fräsen von Höhlungen, wie es sich aus der Zusammenfassung ergibt. Es handelt sich also mehr um ein Kugelfräser, bei dem die Schneidkante in Form einer Hüllkugel oder eines Hüllzylinders angeordnet ist. Die Schneiden sind hierbei am Außendurchmesser des sich drehenden Werkzeuges angeordnet, was in Gegensatz zu Bohrwerkzeugen steht, bei denen die Schneiden in Vorschubrichtung gesehen vorne angeordnet sind.

Das heißt also, der Fräser nach der EP 216 064 A schneidet in Umfangsrichtung mit entsprechend in Umfangsrichtung angeordneten Schneidkanten, während die Bohrplatten für Bohrer an der Stirnseite in Vorschubrichtung schneiden, wodurch sich der Einsatz für Bohrzwecke ausschließt.

Der Erfindung liegt deshalb die Aufgabe zugrunde, eine Bohrplatte der eingangs genannten Art so weiterzubilden, daß die Erzeugung von Fließspänen vermieden wird und daß eine verbesserte Schnittgeometrie gewährleistet ist.

Zur Lösung der gestellten Aufgabe ist die Erfindung durch die technische Lehre des Anspruchs 1 gekennzeichnet.

Wesentliches Merkmal der Erfindung ist, daß in Stirnansicht auf die Bohrplatte zwei diametral gegenüberliegende und zueinander parallele Anlageflächen vorhanden sind, welche die Grundbreite des Klemmschlitzes im Halter definieren und daß diesen zueinander parallelen Anlageflächen schräg gerichtete und die Dicke der Bohrplatte vergrößernde Schneidekanten gegenüber liegen.
Kern der Erfindung ist also, daß die erfindungsgemäße Bohrplatte über die Breite der Bohrplatte, die in den Klemmschlitz paßt und dort anliegt, hinaus vergrößert wird, an den den Klemmschlitz-Anlageflächen gegenüberliegenden Flächen, so daß sich dort vergrößerte Schneideflächen bilden, die nun in optimaler Weise mit einem Spanwinkel und entsprechenden Spanleitstufen ausgebildet werden können.

Es wird also im Gegensatz zum Stand der Technik nicht eine über ihre gesamte Länge gleichbleibend dicke Bohrplatte beschrieben, sondern erfindungsgemäß weist die Bohrplatte nur eine gleichbleibende Dicke im Bereich des Klemmschlitzes und den dort befindlichen Führungsflächen auf, während an den diesen Anlageflächen diametral gegenüberliegenden Flächen die Breite der Bohrplatte (die Dicke) verbreitert ausgebildet ist, um so erstmals die Möglichkeit zu bekommen, in diesem Bereich eine optimale Schnittgeometrie anzubringen.

Hierzu ist vorgesehen, daß im Halter entsprechende, einander diametral gegenüberliegende Haltelappen vorhanden sind, die zwischen sich in bekannter Weise den Klemmschlitz ausbilden, in welchen die Bohrplatte mit zugeordneten, einander diametral gegenüberliegenden Anlageflächen anliegt.

Wichtig ist nun, daß gegenüber diesem Haltelappen im Halter entsprechende Freistellungsflächen vorgesehen sind, in welche nun die Bohrplatte mit verbreiterten Querschnitten hineinragt, welche die Schnittgeometrie definieren.

Damit ist es nun erstmals möglich, eine optimierte Schnittgeometrie zu gewährleisten, denn zur Vermeidung von Fließspänen ist erfindungsgemäß vorgesehen, daß im Bereich der Schneidegeometrie die Dicke der Bohrplatte nun vergrößert ausgebildet ist, um in diesem Bereich Spanleitstufen anzubringen, insbesondere ein S-förmiger Schliff der Schneidekanten in Verbindung mit einer in axialer Richtung sich erstreckenden Spanleitstufe.

Im übrigen ist es bekannt, die Einspannung der Bohrplatte in dem Halter mit zwei, einen Konusrand aufweisenden, einander gegenüberliegenden Spannbohrungen zu bewerkstelligen, die mit entsprechenden konisch ausgebildeten Spannschrauben gespannt werden. Die Einspannung erfolgt in der Weise, daß beim Anziehen der Spannschrauben deren konusförmig ausgebildeter Kopf sich an dem Konusrand der jeweiligen Spannbohrung anlegt und die Bohrplatte mit ihrer Fußseite gegen den Grund des Klemmschlitzes im Halter preßt.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Draufsicht auf eine Bohrplatte nach einem Ausführungsbeispiel der Erfindung;
- Figur 2:: Stirnansicht der Bohrplatte in Richtung II in den Figuren 1 und 3;
- Figur 3:: Seitenansicht der Bohrplatte in Richtung III in den Figuren 1 und 2;
- Figur 4:: die Seitenansicht eines fertigen Bohrwerkzeuges;
- Figur 5:: eine um 90° gedrehte Ansicht des Halters nach Figur 5;
- Figur 6:: die Stirnansicht der Anordnung in Pfeilrichtung VI in Figur 4;
- Figur 7:: den Schnitt durch die Bohrplatte in Richtung der Linie VII-VII in Figur 1.

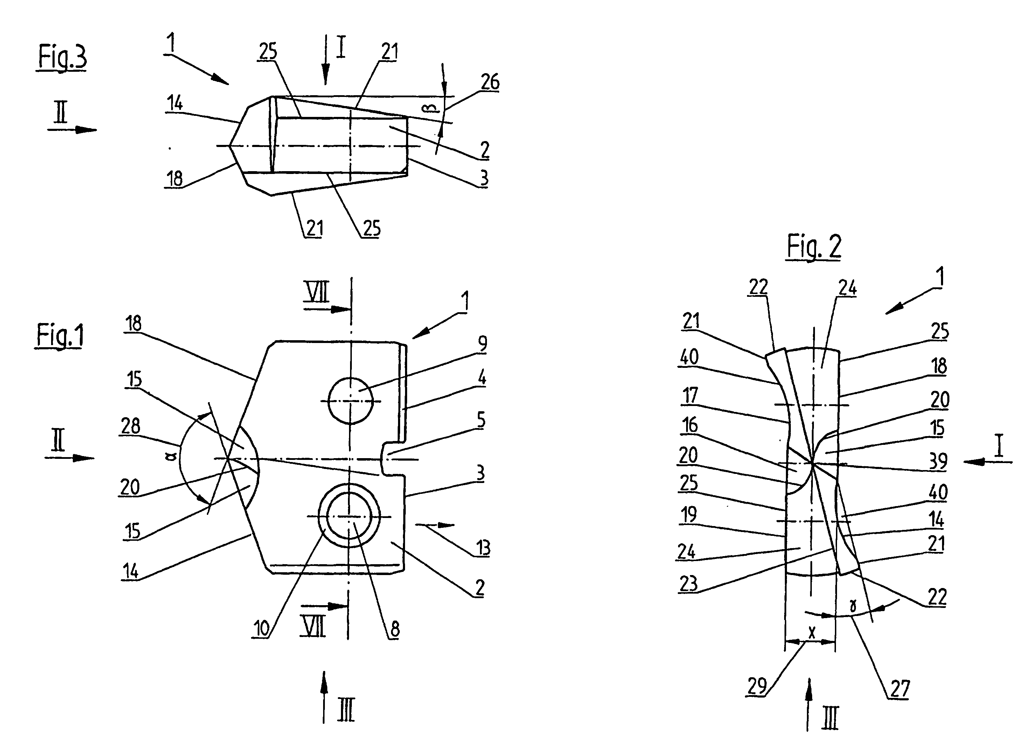

Die Bohrplatte 1 nach der Erfindung besteht im wesentlichen aus einem Grundkörper 2, der aus einem hochfesten Schnittstahl oder einem Hartmetall gebildet ist, wie in **Figur 1** gezeigt.

Der Grundkörper 2 ist im wesentlichen rechteckförmig, wie sich dies aus der Draufsicht in **Figur 2** ergibt. Die **Figur 3** zeigt eine Seitenansicht der Erfindung nach Figur 1.

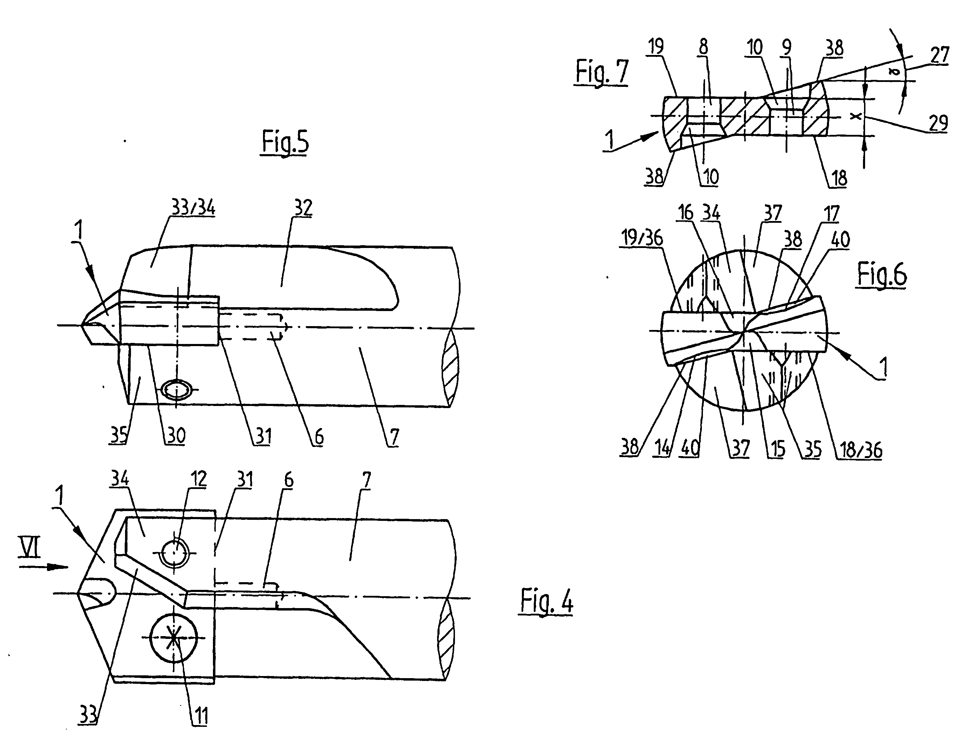

Die Fußseite der Bohrplatte 1 wird durch jeweilige Anlageflächen 3 gebildet, die durch eine mittlere Zentriernut 5 unterbrochen sind. Jede Anlagefläche 3 kann noch eine kleine angefaste Freistellungsfläche 4 aufweisen, um eine verbesserte Anlage am Grund des Klemmschlitzes 30 im Halter 7 (siehe **Figuren 4 und 5**) zu erreichen.

In die Zentriernut 5 greift im übrigen ein Zentrierstift 6 ein, der am Grund des Klemmschlitzes 3 im Halter 7 verankert ist.

Zur Befestigung der Bohrplatte 1 im Halter 7 sind im Halter entsprechende diametral einander gegenüberliegende Haltelappen 34, 35 mit zugeordneten Bohrungen vorgesehen, in welche Spannschrauben 11, 12 eingreifen, welche die Spannbohrungen 8, 9 durchgreifen.

Jede Spannbohrung 8, 9 weist hierbei in an sich bekannter Weise einen umlaufenden Konusrand 10 auf.

Durch das Einschrauben der Spannschrauben 11, 12 wird demgemäß die gesamte Bohrplatte 1 in Pfeilrichtung 13 gegen den Grund des Klemmschlitzes 30 im Halter 7 vorgespannt.

Die Schnittgeometrie des Schneidekopfes wird anhand der Figuren 2, 3, 6 näher erläutert.

Es besteht zunächst gemäß Figur 2 eine Spiegelsymmetrie gegenüber der Drehachse 39 der Bohrplatte 1, so daß insgesamt die einander diametral gegenüberliegenden Schneidekanten 14, 17 S-förmig geschwungen sind. Es genügt daher, in der folgenden Beschreibung stets die eine Seite der Schneidegeometrie der Bohrplatte zu beschreiben, weil die diametral gegenüber liegende Seite der Bohrplatte genau gleich ausgebildet ist.

Im Spitzenbereich der Bohrplatte 1 sind einander gegenüberliegende Ausnehmungen 15, 16 für die Spanabführungen vorgesehen, welche die von den Schneidekanten 14, 17 erzeugten Späne in axialer Richtung nach hinten ableiten.

Im Bereich jeder Ausnehmung 15, 16 ist hierbei eine Bogenkante 20 geführt, welche die sphärische Form dieser Ausnehmung 15, 16 definiert.

Diametral gegenüberliegend von den Schneidekanten 14, 17 sind gerade und parallel zueinander ausgebildete Hinterkanten 18, 19 vorgesehen, welche im wesentlichen die Breite der Bohrplatte 1 im Klemmschlitz 30 definieren.

Diese Breite ist in Figur 2 mit 29 bezeichnet und ist eine derartige Breite, daß der Klemmschlitz 30 relativ schmal ausgebildet werden kann, wodurch der Vorteil besteht, daß die diametral gegenüberliegenden Haltelappen 34, 35 ungeschwächt mit hoher Haltekraft die Bohrplatte 1 einspannen können.

Wichtig ist nun, daß diametral gegenüberliegend von diesen Hinterkanten 18, 19 die Bohrplatte 1 gemäß Figur 2 eine vergrößerte Breite aufweist, wie dies in Figur 2 dadurch dargestellt ist und daß die Fasen 21, welche den äußeren Bereich der jeweiligen Schneidekanten 14, 17 definieren, über die Linien definiert durch die Kanten 18, 19 hinausstehen.

Es wird damit eine Bohrplatte 1 vergrößerter Breite gemäß Figur 2 vorgeschlagen, weil die Breite 29 durch die herausstehenden Fasen 21 jeweils diametral einander gegenüberliegend überschritten wird. Damit ist es erstmals möglich, die Schneidekanten 14, 17 vergrößerter Breite auszubilden, wie nachfolgend noch erläutert wird.

An die außenliegenden Fasen 21 schließen sich etwa im rechten Winkel daran anschließende Führungsfasen 22 an, welche eine Verstärkung der Schnittleiste bilden, so daß eine sehr stabile Schnittleiste gebildet wird.

Es ist im übrigen nicht notwendig, zwischen der Fase 21 und der Führungsfase 22 einen rechten Winkel zu gestalten; dieser Winkel kann entsprechend der Schnittgeometrie frei gewählt werden.

Von der Führungfase 22 schließt sich eine diagonale Hinterkante 23 an, welche die Drehachse 39 durchsetzt und welche die gegenüberliegende Führungsfase 22 trifft.

Jenseits dieser Hinterkante 23 sind jeweils in axialer Richtung vertieft angeordnete Freistellungsflächen 24 vorgesehen, auf denen die Schnittkanten aufgebaut sind.

Wichtig ist nun, daß die Bohrplatte 1 mit den diametral einander gegenüberliegenden und relativ schmal ausgebildeten Anlageflächen 25 in dem Klemmschlitz 30 anliegt, während die verbreiterten Seitenflächen im Bereich der Schneidekanten 14, 17 und der einander gegenüberliegenen Fasen 21, 22 in zugeordneten Freistellungen 37 des Halters 7 hinein ragen, dort wo sie also nirgends anstoßen.

Im Bereich dieser Freistellung 37 weist der Halter in axialer Richtung sich erstreckende Spanflächen 38 auf, wobei die Spanleitstufen 40 an der Bohrplatte 1 in diese Spanflächen 38 in axialer Richtung übergehen.

Damit ist eine optimale Abführung für von den Schneidekanten gebildeten Spänen gebildet, so daß diese abreissen und keine Fließspäne mehr bilden.

Der in Figur 3 dargestellte Winkel 26 (β) definiert den Winkel der Fase 21, was auch mit Spanwinkel bezeichnet wird.

Der Winkel 27 (γ) in Figur 2 definiert die Verbreiterung der Schneidekante 14, 17, was zu der erfindungsgemäß verbesserten Schnittgeometrie führt.

Hierbei wird der Winkel 27 definiert zwischen der Linie durch die Hinterkante 18, 19 und einer Geraden, welche die jeweilige Schneidekante 14, 17 überspannt.

Der Winkel 28 (α) in Figur 1 definiert den spitzen Winkel der gesamten Bohrplatte, d.h. also den Spitzenwinkel der zueinander geneigt ausgebildeten Schneidekanten 14, 17.

In **Figur 5** ist noch dargestellt, wie sich die Anlagefläche 3 an der Bohrplatte an dem Schlitzgrund 31 im Klemmschlitz 30 anlegt. Eine Frontalansicht aus der Pfeilrichtung VI in Figur 4 zeigt die **Figur 6.** Die **Figur 7** zeigt eine Schnittansicht durch die Bohrplatte in der Mitte der Bohrungen 8, 9 aus der Darstellung in der Figur 1.

In Figur 5 ist im übrigen eine Freistellung 33 im Bereich der Vorderkante der Haltelappen 34, 35 dargestellt, welche einer verbesserten Späneabfuhr dient. Die vorher erwähnte Spanabfuhrnut 32 dient zur Abführung der von den Schneidekanten 14, 18 gebildeten Späne im Halter 7.

Die Hinterkanten 18, 19 bilden Anlageflächen 36 an den Seitenwandungen der jeweiligen Haltelappen 34, 35 im Halter.

Wichtig bei der vorliegenden Erfindung ist also, daß eine Bohrplatte 1 mit einer Schnittgeometrie vorgeschlagen wird, die derjenigen eines Bohrers mit verbreiterter Spitze entspricht, ohne daß die Nachteile einer schmalen Bohrplatte mit entsprechend eingeschränkter Schnittgeometrie in Kauf genommen werden müssen.

Erreicht wird dieser Vorteil dadurch, daß nur die diametral einander gegenüberliegend im Halter 7 angeordneten Anlageflächen 3 relativ schmal ausgebildet sind, während die diesen Anlageflächen gegenüberliegenden und die Schnittgeometrie bestimmenden Flächen der Bohrplatte 1 relativ breit ausgebildet sind, so daß sich erstmals die Möglichkeit ergibt, optimale Spanwinkel und Spanleitstufen in diesem Bereich anzuordnen, ohne den Querschnitt der Bohrplatte 1 wesentlich zu schwächen.

### Zeichnungslegende

- 1: Bohrplatte
- 2: Grundkörper
- 3: Anlagefläche
- 4: Freistellungsfläche
- 5: Zentriernut
- 6: Zentrierstift
- 7: Halter
- 8: Spannbohrung
- 9: Spannbohrung
- 10: Konusrand
- 11: Spannschraube
- 12: Spannschraube
- 13: Pfeilrichtung
- 14: Schneidekante
- 15: Ausnehmung
- 16: Ausnehmung
- 17: Schneidekante
- 18: Hinterkante
- 19: Hinterkante
- 20: Bogenkante
- 21: Fase
- 22: Führungsfase
- 23: Hinterkante
- 24: Freistellungsfläche
- 25: Anlagefläche
- 26: Winkel β (Spanwinkel)
- 27: Winkel
- 28: Winkel
- 29: Breite
- 30: Klemmschlitz
- 31: Schlitzgrund
- 32: Spanabfuhrnut
- 33: Freistellung
- 34: Haltelappen
- 35: Haltelappen
- 36: Anlagefläche
- 37: Freistellung
- 38: Spanfläche
- 39: Drehachse
- 40: Spanleitstufe

## Patentansprüche

1. Einteilige, zur Bohrspitze in Stirnansicht gesehen punktsymmetrische Bohrplatte (1) und Halter (7) für die Bohrplatte (1) zum Bearbeiten von Bohrlöchern in Werkstücken, wobei der Halter (7) für die Bohrplatte (1) etwa stiftförmig ausgebildet ist und die Bohrplatte (1) an seiner Stirnseite in einem Klemmschlitz (30) aufnimmt, wobei die Bohrplatte (1) in Stirnansicht gesehen zwei diametral gegenüberliegende Anlageflächen (25) und Hinterkanten (18, 19) aufweist, welche die Blattstärke (29) des Grundkörpers (2) der Bohrplatte (1) definieren, und die Bohrplatte (1) an ihrer dem Halter (7) abgewendeten Stirnseite, den Hinterkanten (18, 19) gegenüberliegende und einander diametral gegenüberliegende, spanerzeugende Schneidekanten (14, 17) aufweist, **dadurch gekennzeichnet, daß** die Bohrplatte (1) im Bereich der Schneidegeometrie mit einer im Bezug auf die Blattstärke (29) des Grundkörpers (2) der Bohrplatte (1) vergrößerten Stärke/Dicke ausgebildet ist, in der die spanerzeugenden stirnseitigen Schneidekanten (14, 17), die insgesamt S-förmig geschwungen sind, und spanbrechende in axialer Richtung sich erstreckende Spanleitstufen (40) ausgebildet sind.

2. Bohrplatte (1) und Halter (7) für die Bohrplatte (1) nach Anspruch 1, **dadurch gekennzeichnet, daß** in Stirnansicht der Bohrplatte (1) gesehen, die die Schneidkanten (14, 17) überspannenden Geraden mit den Hinterkanten (18, 19) des Grundkörpers (2) der Bohrplatte (1) einen Winkel (γ) einschließen, der die Verbreiterung der Blattstärke (29) des Grundkörpers (2) definiert.

3. Bohrplatte (1) und Halter (7) für die Bohrplatte (1) nach Anspruch 1 oder 2, **dadurch gekennzeichnet, daß** im Spitzenbereich der Bohrplatte (1) einander gegenüberliegende Ausnehmungen (15, 16) für die Spanabführungen vorgesehen sind, welche die von den Schneidekanten (14, 17) erzeugten Späne in axialer Richtung nach hinten ableiten.

4. Bohrplatte (1) und Halter (7) für die Bohrplatte (1) nach Anspruch 1, 2 oder 3, **dadurch gekennzeichnet, daß** im Bereich jeder Ausnehmung (15, 16) eine Bogenkante (20) geführt ist, welche eine sphärische Form dieser Ausnehmung (15,16) definiert.

5. Bohrplatte (1) und Halter (7) für die Bohrplatte (1) nach einem der Ansprüche 1 - 4, **dadurch gekennzeichnet, daß** die Fasen (21), welche den äußeren Bereich der jeweiligen Schneidekanteri (14, 17) definieren, über die durch die Hinterkanten (18, 19) definierten Linien hinausstehen.

6. Bohrplatte (1) und Halter (7) für die Bohrplatte (1) nach einem der Ansprüche 1 - 5, **dadurch gekennzeichnet, daß** an die außenliegenden Fasen (21) sich etwa im rechten Winkel daran Führungsfasen (22) anschließen, welche eine Verstärkung der Schnittleiste bilden.

7. Bohrplatte (1) und Halter (7) für die Bohrplatte (1) nach einem der Ansprüche 1 - 6, **dadurch gekennzeichnet, daß** von der Führungsfase (22) sich eine diagonale Hinterkante (23) anschließt, welche die Drehachse (39) durchsetzt und welche die gegenüberliegende Führungsfase (22) trifft.

8. Bohrplatte (1) und Halter (7) für die Bohrplatte (1) nach einem der Ansprüche 1 - 7, **dadurch gekennzeichnet, daß** in Stirnansicht auf die Bohrplatte (1) zwei diametral gegenüberliegende und zueinander parallele Anlageflächen (25) vorhanden sind und die Bohrplatte (1) im Bereich des Klemmschlitzes (30) und den dort befindlichen Anlageflächen (25) eine gleichbleibende Blattstärke (29) aufweist.

9. Bohrplatte (1) und Halter (7) für die Bohrplatte (1) nach einem der Ansprüche 1 - 8, **dadurch gekennzeichnet, daß** die verbreiterten Seitenflächen der Bohrplatte (1) im Bereich der Schneidekanten (14, 17) und der einander gegenüberliegenden Fasen (21, 22) in zugeordnete Freistellungen (37) des Halters (7) hineinragen.

10. Bohrplatte (1) und Halter (7) für die Bohrplatte (1) nach einem der Ansprüche 1 - 9, **dadurch gekennzeichnet, daß** an der Bohrplatte (1) jenseits der Hinterkante (23) jeweils in axialer Richtung vertieft angeordnete Freistellungsflächen (24) vorgesehen sind.

11. Bohrplatte (1) und Halter (7) für die Bohrplatte (1) nach einem der Ansprüche 1 - 10, **dadurch gekennzeichnet, daß** die Bohrplatte (1) zwischen zwei am Halter (7) stirnseitig diametral einander gegenüberliegend angeordneten Haltelappen (34, 35) mit zugeordneten Bohrungen befestigt ist, in welche Spannschrauben (11, 12) eingreifen, welche Spannbohrungen (8, 9) in der Bohrplatte (1) durchgreifen.

12. Bohrplatte (1) und Halter (7) für die Bohrplatte (1) nach Anspruch 11, **dadurch gekennzeichnet, daß** in die zwischen den beiden Haltelappen (34, 35) angeordnete Zentriernut (5) ein Zentrierstift (6) eingreift, der am Grund des Klemmschlitzes (30) im Halter (7) verankert ist.

13. Bohrplatte (1) und Halter (7) für die Bohrplatte (1) nach einem der Ansprüche 9 - 12, **dadurch gekennzeichnet, daß** im Bereich der Freistellung (37) der Halter (7) in axialer Richtung sich erstreckende Spanflächen (38) aufweist, wobei die spanbrechenden Spanleitstufen (40) an der Bohrplatte (1) in diese Spanflächen (38) in axialer Richtung übergehen, so daß eine optimale Abführung für von den Schneidekanten gebildeten Spänen gebildet ist, so daß diese abreißen und keine Fließspäne bilden.

14. Bohrplatte (1) und Halter (7) für die Bohrplatte (1) nach einem der Ansprüche 11 - 13, **dadurch gekennzeichnet, daß** eine Freistellung (33) im Bereich der Vorderkante der Haltelappen (34, 35) ausgebildet ist, welche einer verbesserten Späneabfuhr dient.

15. Bohrplatte (1) und Halter (7) für die Bohrplatte (1) nach einem der Ansprüche 1 - 14, **dadurch gekennzeichnet, daß** eine Spanabfuhrnut (32) im Halter (7) zur Abführung der von den Schneidekanten (14, 17) gebildeten Späne dient.

## Claims

1. One-piece drill tip (1) centrosymmetrical with respect to the drill point when viewed on end, and holder (7) for the drill tip (1), for machinining drilled holes in workpieces, the holder (7) for the drill tip (1) being approximately pencil-shaped and holding the drill tip (1) in a clamping slot (30) at its end, the drill tip (1) when viewed on end having two diametrically opposite bearing faces (25) and rear edges (18, 19) which define the plate thickness (29) of the body (2) of the drill tip (1), and the drill tip (1) having chip-producing cutting edges (14, 17) opposite the rear edges (18, 19) and diametrically opposite each other on its end pointing away from the holder (7), **characterized in that** in the region of its cutting geometry the drill tip (1) is configured with a thickness (fatness) greater than the plate thickness (29) of the body (2) of the drill tip (1) in which the chip-producing endwise cutting edges (14, 17) whose overall shape is an S-shaped curve and axially extending chip-breaking steps (40) are formed.

2. Drill tip (1) and holder (7) for the drill tip (1) according to Claim 1, **characterized in that** the straight lines spanning the cutting edges (14, 17) when the drill tip (1) is viewed on end include with the rear edges (18, 19) of the body (2) of the drill tip (1) an angle (γ) which defines the broadening of the plate thickness (29) of the body (2).

3. Drill tip (1) and holder (7) for the drill tip (1) according to Claim 1 or Claim 2, **characterized in that** chip-clearance recesses (15, 16) are provided opposite each other in the region of the point of the drill tip (1) to deflect axially and rearwards the chips produced by the cutting edges (14, 17).

4. Drill tip (1) and holder (7) for the drill tip (1) according to Claims 1, 2 or 3, **characterized in that** a curved edge (20) is led in the region of each recess (15, 16) and defines a spherical form of the recess (15, 16).

5. Drill tip (1) and holder (7) for the drill tip (1) according to any one of Claims 1 - 4, **characterized in that** the chamfers (21) which define the outer region of the respective cutting edges (14, 17) stick out beyond the lines defined by the rear edges (18, 19).

6. Drill tip (1) and holder (7) for the drill tip (1) according to any one of Claims 1 - 5, **characterized in that** guiding chamfers (22) forming reinforcement of the cutting shoulder meet the outer chamfers (21) approximately at right angles thereto.

7. Drill tip (1) and holder (7) for the drill tip (1) according to any one of Claims 1 - 6, **characterized in that** the guiding chamfer (22) meets a diagonal rear edge (23) which passes through the rotational axis (39) and meets the guiding chamfer (22) on the opposite side.

8. Drill tip (1) and holder (7) for the drill tip (1) according to any one of Claims 1 - 7, **characterized in that** when the drill tip (1) is viewed on end, two diametrically opposite and parallel bearing faces (25) are present and the drill tip (1) has a uniform plate thickness (29) in the region of the clamping slot (30) and the bearing faces there.

9. Drill tip (1) and holder (7) for the drill tip (1) according to any one of Claims 1 - 8, **characterized in that** the broadened flanks of the drill tip (1) in the region of the cutting edges (14, 17) and of the chamfers (21, 22) on either side project into corresponding clearances (37) in the holder (7).

10. Drill tip (1) and holder (7) for the drill tip (1) according to any one of Claims 1-9, **characterized in that** an axially recessed clearance face (24) is provided on the drill tip (1) beyond each rear edge (23).

11. Drill tip (1) and holder (7) for the drill tip (1) according to any one of Claims 1-10, **characterized in that** the drill tip (1) is fixed between two retaining lobes (34, 35) with corresponding holes, which are arranged diametrically opposite each other at the end of the holder (7) and in which clamping screws (11, 12) passing through clamping holes (8, 9) in the drill tip (1) engage.

12. Drill tip (1) and holder (7) for the drill tip (1) according to Claim 11, **characterized in that** a centring pin (6) anchored in the holder (7) at the root of the clamping slot (30) engages in the centring slot (5) arranged between the two retaining lobes (34, 35).

13. Drill tip (1) and holder (7) for the drill tip (1) according to any one of Claims 1 - 12, **characterized in that** in the region of the clearance (37) the holder (7) has axially extending tool faces (38) with the chip-breaking steps (40) on the drill tip (1) merging into these tool faces (38) in the axial direction thus providing optimal deflection of the chips produced by the cutting edges so that these break away and do not form continuous chips.

14. Drill tip (1) and holder (7) for the drill tip (1) according to any one of Claims 11 - 13, **characterized in that** a clearance (33) affording improved chip deflection is formed in the region of the front edge of the retaining lobes (34, 35).

15. Drill tip (1) and holder (7) for the drill tip (1) according to any one of Claims 1 - 14, **characterized in that** a chip removal groove (32) in the holder (7) serves to clear the chips made by the cutting edges (14, 17).

## Revendications

1. Plaquette de foret monobloc (1) symétrique par rapport à la pointe de foret, vue de face, et porte-outil (7) pour la plaquette de foret (1), pour l'usinage de trous dans des pièces, étant précisé que le porte-outil (7) pour la plaquette (1) a à peu près la forme d'une tige et reçoit sur son côté frontal, dans une fente de serrage (30), ladite plaquette (1), que la plaquette (1) présente, vue de face, deux surfaces d'application (25) diamétralement opposées et des arêtes arrière (18, 19) qui définissent l'épaisseur de lame (29) du corps de base (2) de la plaquette (1), et que ladite plaquette (1) présente sur son côté frontal opposé au porte-outil (7) des arêtes de coupe (14, 17) diamétralement opposées et opposées aux arêtes arrière (18, 19), qui produisent des copeaux, **caractérisée en ce que** la plaquette de foret (1) est dotée dans la zone de la géométrie de coupe d'une épaisseur qui est supérieure à l'épaisseur de lame (29) du corps de base (2) de la plaquette (1) et dans laquelle sont formés les arêtes de coupe frontales (14, 17) qui produisent les copeaux et qui ont dans l'ensemble une forme en S, et des brise-copeaux (40) qui s'étendent dans le sens axial.

2. Plaquette de foret (1) et porte-outil (7) pour la plaquette de foret (1) selon la revendication 1, **caractérisée en ce que** si on regarde la plaquette de foret (1) de face, les droites qui couvrent les arêtes de coupe (14, 17) définissent avec les arêtes arrière (18, 19) du corps de base (2) de la plaquette (1) un angle (γ) qui définit l'élargissement de l'épaisseur de lame (29) du corps de base (2).

3. Plaquette de foret (1) et porte-outil (7) pour la plaquette de foret (1) selon la revendication 1 ou 2,
**caractérisée en ce qu'**il est prévu dans la zone de la pointe de la plaquette (1) des creux opposés (15, 16) pour l'évacuation des copeaux, qui dévient vers l'arrière dans le sens axial les copeaux produits par les arêtes de coupe (14, 17).

4. Plaquette de foret (1) et porte-outil (7) pour la plaquette de foret (1) selon la revendication 1, 2 ou 3,
**caractérisée en ce qu'**il est prévu dans la zone de chaque creux (15, 16) une arête courbe (20) qui définit une forme sphérique de ce creux (15, 16).

5. Plaquette de foret (1) et porte-outil (7) pour la plaquette de foret (1) selon l'une des revendications 1 à 4, **caractérisée en ce que** les chanfreins (21) qui définissent la zone extérieure des arêtes de coupe (14, 17) dépassent des lignes définies par les arêtes arrière (18, 19).

6. Plaquette de foret (1) et porte-outil (7) pour la plaquette de foret (1) selon l'une des revendications 1 à 5, **caractérisée en ce qu'**il est prévu dans le prolongement des chanfreins extérieurs (21), à peu près à angle droit, des chanfreins de guidage (22) qui forment un renforcement du bord de coupe.

7. Plaquette de foret (1) et porte-outil (7) pour la plaquette de foret (1) selon l'une des revendications 1 à 6, **caractérisée en ce qu'**il est prévu dans le prolongement du chanfrein de guidage (22) une arête arrière diagonale (23) qui traverse l'axe de rotation (39) et qui rejoint le chanfrein de guidage opposé (22).

8. Plaquette de foret (1) et porte-outil (7) pour la plaquette de foret (1) selon l'une des revendications 1 à 7, **caractérisée en ce qu'**il est prévu, si on regarde la plaquette de foret (1) de face, deux surfaces d'application (25) diamétralement opposées et parallèles, et la plaquette de foret (1) présente dans la zone de la fente de serrage (30) et des zones d'application (25) prévues à cet endroit une épaisseur de lame (29) constante.

9. Plaquette de foret (1) et porte-outil (7) pour la plaquette de foret (1) selon l'une des revendications 1 à 8, **caractérisée en ce que** les surfaces latérales élargies de la plaquette de foret (1) entrent dans des dégagements associés (37) du porte-outil (7), dans la zone des arêtes de coupe (14, 17) et des chanfreins opposés (21, 22).

10. Plaquette de foret (1) et porte-outil (7) pour la plaquette de foret (1) selon l'une des revendications 1 à 9, **caractérisée en ce qu'**il est prévu sur la plaquette de foret (1), au-delà de l'arête arrière (23), des surfaces de dégagement (24) creusées axialement.

11. Plaquette de foret (1) et porte-outil (7) pour la plaquette de foret (1) selon l'une des revendications 1 à 10, **caractérisée en ce que** la plaquette de foret (1) est fixée entre deux pattes de fixation (34, 35) diamétralement opposées qui sont prévues sur le côté frontal du porte-outil (7) et qui présentent des perçages associés dans lesquels pénètrent des vis de serrage (11, 12) qui traversent des perçages de serrage (8, 9) de la plaquette de foret (1).

12. Plaquette de foret (1) et porte-outil (7) pour la plaquette de foret (1) selon la revendication 11, **caractérisée en ce qu'**une tige de centrage (6) pénètre dans la rainure de centrage (5) disposée entre les deux pattes de fixation (34, 35) et est ancrée au fond de la fente de serrage (30) du porte-outil (7).

13. Plaquette de foret (1) et porte-outil (7) pour la plaquette de foret (1) selon l'une des revendications 9 à 12, **caractérisée en ce que** dans la zone du dégagement (37), le porte-outil (7) présente des faces de coupe (38) qui s'étendent dans le sens axial, les brise-copeaux (40) de la plaquette (1) se prolongeant axialement par ces faces de coupe (38), ce qui forme une évacuation optimale pour les copeaux formés par les arêtes de coupe, de sorte que ces copeaux sont fragmentés et ne forment pas de copeaux continus.

14. Plaquette de foret (1) et porte-outil (7) pour la plaquette de foret (1) selon l'une des revendications 11 à 13, **caractérisée en ce qu'**il est prévu dans la zone de l'arête avant des pattes de fixation (34, 35) un dégagement (33) qui sert à une meilleure évacuation des copeaux.

15. Plaquette de foret (1) et porte-outil (7) pour la plaquette de foret (1) selon l'une des revendications 1 à 14, **caractérisée en ce qu'**une rainure d'évacuation de copeaux (32) prévue dans le porte-outil (7) sert à l'évacuation des copeaux formés par les arêtes de coupe (14, 17).
